# EUROPEAN PATENT APPLICATION

(11) **EP 1 113 513 A2**
(43) Date of publication of application: **04.07.2001**
(21) Application number: 00126541.2
(22) Date of filing: 11.12.2000
(51) Int. Cl.: H01M 4/38

(54) **Hydrogen occluding alloy for battery cathode**

(30) Priority: 24.12.1999 JP 36689299; 08.02.2000 JP 2000030091
(71) Applicant: MITSUBISHI MATERIALS CORPORATION, Chiyoda-ku, Tokyo 100 (JP)
(72) Inventor: Kita, Koichi, Mitsubishi Materials Corp., Omiya-shi, Saitama-ken (JP); Wada, Masahiro, Mitsubishi Materials Corp., Omiya-shi, Saitama-ken (JP); Sugahara, Katsuo, Mitsubishi Materials Corp., Omiya-shi, Saitama-ken (JP); Isobe, Takeshi, Mitsubishi Materials Corp., Omiya-shi, Saitama-ken (JP); Murai, Takuya, Mitsubishi Materials Corp., Omiya-shi, Saitama-ken (JP)
(74) Representative: Gille Hrabal Struck Neidlein Prop Roos

(57) **Abstract**

Disclosed is a hydrogen occluding alloy used for a cathode of battery which enables to provide for a high discharge capacity at small number of charge/discharge cycles by a high-rate initial activation treatment and to increase a high-rate discharge capacity at low temperature.

The hydrogen occluding alloy comprises;
32 to 38% of rare earth elements mainly comprising La and/or Ce,
0.1 to 17% of Co,
0.1 to 3.5 % of Al,
0.5 to 10 % of Mn and
0.005% to 0.2% of hydrogen, with the balance being Ni and inevitable impurities,
and has a microstructure obtained by X-ray diffraction and microstructure observation with scanning electron microscope, the microstructure comprising a continuous phase and dispersed phase wherein the continuous phase is composed of Cacu₃-type crystal structure and the dispersed phase is composed of three phases comprising Ce₂Ni₇-type crystal structure, rare earth element hydride which is a reaction product produced by the hydrogen heat treatment of the Ce₂Ni₇-type crystal structure and CaCu₅-type crystal structure, and the dispersed phase of the CaCu₅-type crystal structure is interposed in between the Ce₂Ni₇-type crystal structure and rare earth element hydride both of which are dispersed phases.

## Description

### BACKGROUND OF THE INVENTION

### Field of the Invention:

The present invention relates to a hydrogen occluding alloy which is used for a battery as a cathode and provides to the battery a high electric discharge capacity at small number of electric charge/discharge cycles (electric charge is referred to as charge and electric discharge is referred to as discharge, hereinafter) by an initial activation treatment for the battery at a quick discharge speed (referred to as high-rate initial activation treatment, hereinafter), that is, enables to increase the maximum discharge capacity of the battery and to provide to the battery a high-rate discharge capacity at low temperature.

### Description of the Related Art:

Conventionally, as hydrogen occluding alloys used for a cathode of battery, for example, JP-A 10-25528 discloses the following hydrogen occluding alloy which has a composition comprising, by mass % (% means mass %, hereinafter);
32 to 38% of rare earth elements mainly comprising La and/or Ce,
0.1 to 17% of Co,
0.5 to 3.5 % of Al,
0.5 to 10 % of Mn and
0.005% to 0.5% of hydrogen, with the balance being Ni and inevitable impurities,
and has a microstructure where rare earth element hydride is dispersively distributed in a matrix having a CaCu₅-type crystal structure. The above-mentioned hydrogen occluding alloy is also known in that in the case of using the hydrogen occluding alloy as a cathode for a battery, the battery exhibits a quite rapid hydrogen absorption/desorption speed by the action of the rare earth element hydride which is dispersively distributed in a matrix having a CaCu₅-type crystal structure.

In addition, the hydrogen occluding alloy as mentioned above is made for a cathode of battery by the process comprising the steps of; preparing a molten hydrogen occluding alloy having the above-mentioned composition, providing for a material of the hydrogen occluding alloy having a prescribed shape by casting processes such as mold casting, centrifugal casting and rapidly chilled roll casting or gas atomizing process; then, if necessary, subjecting the material to a homogenizing heat treatment in a non-oxidizing atmosphere comprising vacuum or an inert gas at a prescribed temperature within the range of 1173 to 1323K (900 to 1050 °C) for a prescribed time; next, subjecting the material to a hydrogen heat treatment in a hydrogen atmosphere at a prescribed temperature within the range of 673 to 1273K (400 to 1000°C) for a prescribed time followed by cooling slowly, thereby to obtain a microstructure where the rare earth element hydride is dispersively distributed in a matrix having the CaCu₅-type crystal structure; and after that, pulverizing mechanically the treated hydrogen occluding alloy mentioned above to provide powder having a prescribed particle size or pulverizing by a hydrogenation process which includes hydrogen absorption under a pressurized hydrogen at a prescribed temperature within the range of 283 to 473K (10 to 200°C) and hydrogen desorption by vacuum evacuation.

Further, a battery having a cathode into which the hydrogen occluding alloy powder mentioned above is incorporated is treated according to various conditions to obtain a discharge capacity proper to a battery (maximum discharge capacity); for examples, a battery used for a low power equipment is subjected to an initial activation treatment at a slow charge speed (low-rate initial activation treatment), for example, 0.25C, and a battery used for a high power equipment is subjected to an initial activation treatment at a quite quick discharge speed (high-rate initial activation treatment), for example, 10C.

On the other hand, there has increased a demand for batteries used for various mechanical equipment which require a high power, for examples, electric tools, electrically assisted bicycles and electric automobiles, and the hydrogen occluding alloy mentioned above is studied on using a battery having a cathode into which the hydrogen occluding alloy is incorporated for the above-mentioned high power equipment. In the case of batteries for the high power equipment mentioned above, the high-rate initial activation treatment is essentially required as mentioned above. However, a required increase in the maximum discharge capacity of the battery is not available by the high-rate initial activation treatment and in addition, many number of charge/discharge cycles are required for providing the maximum discharge capacity, for example, 30 to 50 cycles of charge/discharge are required with the result that the practical use thereof is difficult.

### SUMMARY OF THE INVENTION

From the above-mentioned standpoint, the inventors of the present invention have researched hydrogen occluding alloys used for a cathode of battery for the purpose of developing batteries which enable to increase a maximum discharge capacity within small number of charge/discharge cycles by a high-rate initial activation treatment and have obtained the findings as mentioned below;

In a hydrogen heat treatment to which the conventional hydrogen occluding alloy mentioned above is subjected for forming rare earth element hydride, when a heating-up process from room temperature to a prescribed temperature within the range of 473 to 673K (200 to 400°C) is carried out in vacuum or an inert gas atmosphere, the subsequent hydrogen heat treatment comprising holding in a hydrogen atmosphere at a prescribed temperature within the range of 673 to 1273K (400 to 1000°C) for a prescribed time followed by cooling, that is, the formation of rare earth element hydride starts from a state of microstructure where a Ce₂Ni₇-type crystal structure is dispersively distributed in a matrix having a CaCu₅-type crystal structure;

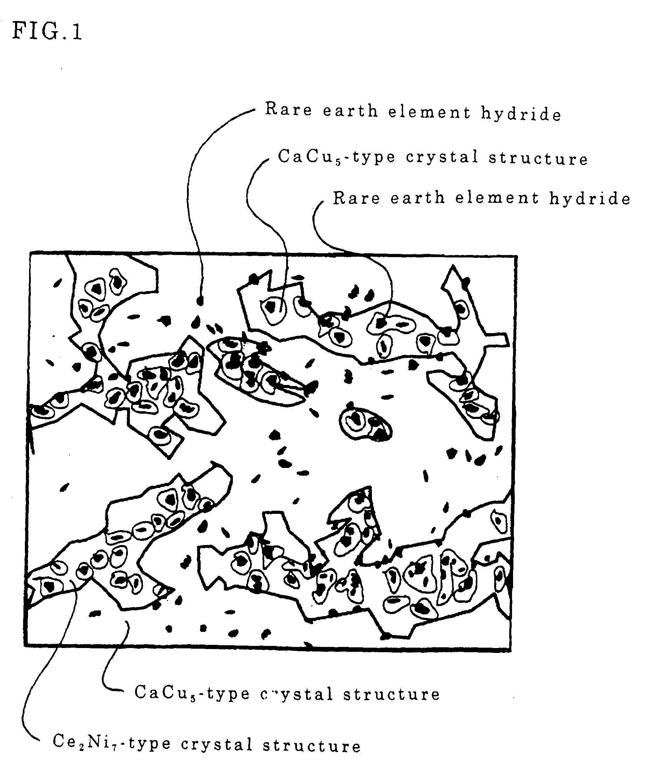

As a result, as shown, for example, in Fig.1 illustrating a microstructure (magnifications: 15000) of an alloy 2 as the example of the present invention obtained by scanning electron microscope, X-ray diffraction and microstructure observation with scanning electron microscope showed the following result: the microstructure comprises a continuous phase and dispersed phase wherein the continuous phase is composed of CaCu₅-type crystal structure and the dispersed phase is composed of three phases comprising Ce₂Ni₇-type crystal structure, rare earth element hydride which is a reaction product produced by the hydrogen heat treatment of the Ce₂Ni₇-type crystal structure and CaCu₅-type crystal structure, and the dispersed phase of the CaCu₅-type crystal structure is interposed in between the Ce₂Ni₇-type crystal structure and rare earth element hydride both of which are dispersed phases; and

When an alloy having the above-mentioned microstructure is used as a cathode of battery, the maximum discharge capacity is greatly increased by the high-rate initial activation treatment of the battery owing to the action of the Ce₂Ni₇-type crystal structure and CaCu₅-type crystal structure both of which are the dispersed phases of the above-mentioned alloy, namely, a high maximum discharge capacity is provided to the battery as well as the high maximum discharge capacity which is increased is available at small number of charge/discharge cycles, and further, a high high-rate discharge capacity at low temperature is provided to the battery, and that, hydrogen absorption and hydrogen desorption proceed as quickly as in the conventional occluding alloy, which is contributed by the rare earth element hydride also composing a dispersed phase.

### BRIEF DESCRIPTION OF THE DRAWING

Fig.1 is illustrating the result of microstructure observation (magnifications: 15000) of an alloy 2 of the present invention using a scanning electron microscope.

### DESCRIPTION OF PREFERRED EMBODIMENTS

The present invention has been achieved on the above-mentioned findings and is characterized by the following hydrogen occluding alloy used for a cathode of battery;

The hydrogen occluding alloy of the present invention has a composition comprising;
32 to 38% of rare earth elements mainly comprising La and/or Ce,
0.1 to 17% of Co,
0.1 to 3.5 % of Al,
0.5 to 10 % of Mn and
0.005% to 0.2% of hydrogen, with the balance being Ni and inevitable impurities,
and has a microstructure obtained by X-ray diffraction and microstructure observation with scanning electron microscope, the microstructure comprising a continuous phase and dispersed phase wherein the continuous phase is composed of CaCu₅-type crystal structure and the dispersed phase is composed of three phases comprising Ce₂Ni₇-type crystal structure, rare earth element hydride which is a reaction product produced by the hydrogen heat treatment of the Ce₂Ni₇-type crystal structure and CaCu₅-type crystal structure, and the dispersed phase of the CaCu₅-type crystal structure is interposed in between the Ce₂Ni₇-type crystal structure and rare earth element hydride both of which are dispersed phases,
wherein the hydrogen occluding alloy enables to provide to the battery a high discharge capacity at small number of charge/discharge cycles by a high-rate initial activation treatment and to increase a high-rate discharge capacity at low temperature.

Following explanation is the reason why the composition of the hydrogen occluding alloy is defined as mentioned above.

### (a) Rare earth elements mainly comprising La and/or Ce

These rare earth elements form a continuous phase of CaCu₅-type crystal structure having a hydrogen absorbing function with Ni, and form rare earth element hydride which contributes to promoting a hydrogen adsorption/desorption speed and Ce₂Ni₇-type crystal structure which contributes to obtaining a high discharge capacity at small number of charge/discharge cycles by a high-rate initial activation treatment of a battery and increasing a high-rate discharge capacity at low temperature. Since a maximum discharge capacity is decreased when the content is less than 32% or over 38%, the content is defined to 32 to 38% and preferable is 33 to 35%.

### (b) Co

A Co component dissolves into the matrix and has effects which reduce expansion/shrinkage of volume during hydrogen absorption/desorption with the result of preventing the fine-pulverization of the alloy and prolonging its usable life when the Co content is less than 0.1%, the above-mentioned effects can not be achieved. On the other hand, when the content is over 17%, the number of charge/discharge cycles tends to increase which are required for attaining a maximum discharge capacity when the high-rate initial activation treatment is carried out. Accordingly, the content is defined to 0.1 to 17% and preferable is 6 to 12%.

### (c) Al

An Al component dissolves into the matrix and improves the corrosion resistance of the alloy. When the content is less than 0.1%, the desired effect on corrosion resistance can not be achieved. On the other hand, when the content exceeds 3.5%, a maximum discharge capacity and a high-rate discharge capacity at low temperature decrease. Accordingly, the content is defined to 0.1 to 3.5% and preferable is 1 to 2%.

### (d) Mn

A Mn component dissolves into the matrix and has effects which decrease the equilibrium dissociation pressure of hydrogen and increase a maximum discharge capacity. When the content is less than 0.5%, the desired effect on increasing the maximum discharge capacity is not available. On the hand, when the content exceeds 10%, the maximum discharge capacity tends to decrease. Accordingly, the content is defined to 0.5 to 10% and preferable is 3 to 8%.

### (e) Hydrogen

Hydrogen predominantly bonds to rare earth elements by hydrogen heat treatment at high temperature to form rare earth element hydride which contributes to increasing a hydrogen absorption and desorption speed. When the content is less than 0.05%, the ratio of the formed rare earth element hydride is insufficient with result that the effect thereof is not enough. On the other hand, when the content is over 0.2%, the ratio of the formed rare earth element hydride is excessive with the result that a relative ratio of CaCu₅-type crystal structure is excessively decreased and a maximum discharge capacity tends to sharply decrease. Accordingly, the content is defined to 0.005 to 0.2% and preferably is 0.01 to 0.15%.

The hydrogen occluding alloy of the present invention is described further in detail with reference to exemplified embodiments hereunder.

Ni, La, Ce, Co, Al and Mn, further with a misch metal, as raw materials, each having a purity of at least 99.9% are melted in vacuum, using an ordinary high-frequency induction furnace, to prepare molten alloys each having a composition shown in Tables 1 to 3 and each molten metal is treated by any one of molten alloy treatments of (A) to (E) mentioned below.
(A) Mold casting-homogenizing heat treatment method (referred to as A method, hereinafter); the method comprises the steps of: casting a molten alloy in a water-cooled copper mold to form an ingot; and subjecting the ingot to a homogenizing heat treatment comprising the condition of holding in vacuum at a prescribed temperature within the range of 1123 to 1323K (850 to 1050°C) for 10 hours.
(B) Mold casting method (referred to as B method, hereinafter); the method comprises the step of casting a molten alloy in a water-cooled copper mold to form an ingot.
(C) Quickly chilled roll method (referred to as C method, hereinafter); the method comprises the step of dropping a molten alloy through an outlet having a diameter of 1mm from a height of 20cm into the surface of a water-cooled copper roll having a diameter of 50cm and rotating at a circumferential speed of 25m/sec to form a thin plate (leaf).
(D) Centrifugal casting method (referred to as D method) : the method comprises the step of casting a molten alloy from a height of 20cm at a flow rate of 120kg/sec in the inside surface of a water-cooled copper drum having an inside diameter of 100cm X a length of 200cm and rotating at a circumferential speed of 15m/sec to form a cylindrical material.
(E) Gas atomizing method (referred to as E method, hereinafter): the method comprises the step of spraying an Ar gas having a gas pressure of 2.45MPa (25kg/cm²) at a flow rate 12Nm³/min to a molten alloy flowing downward from an outlet for molten metal having a diameter of 3mm to provide powder.

Each molten alloy is subjected to any one of the molten alloy treatments (the combination of each molten alloy with an applied treatment is shown in Tables 1 to 3) to form a hydrogen occluding alloy material having a prescribed shape. Then, with regard to the above-mentioned materials obtained by applying any one of the A to D methods among the A to E methods, a material is inserted into a furnace for heat treatment and the following treatments are carried out: first, when a hydrogen heat treatment is carried out, heating up from room temperature to a prescribed temperature of within the range of 393 to 673K (120 to 400°C) is carried out in a vacuum condition of 0.13Pa (10⁻³Torr) to form an alloy having a microstructure in which a phase having a Ca₂Ni₇ type crystal structure is dispersively distributed in a matrix having a CaCu₅-type crystal structure; subsequently, after changing the vacuum atmosphere mentioned above to a hydrogen atmosphere having a prescribed pressure of within the range of 0.11 to 1.01MPa (1.1 to 10bar), heating up is continued to a prescribed temperature of within the range of 673 to 1273K (400 to 1000°C), followed by holding at this temperature for 1 hour; and then, cooling is carried out to a temperature of 573K (300°C) or less, whereby the hydrogen heat treatment is carried out. Further, pulverizing by a hydrogenation process is carried out which comprised hydrogen absorbing at a prescribed temperature of with of 283 to 473K (10 to 200°C) during the above-mentioned cooling process, followed by hydrogen desorption by vacuum exhausting, to thereby obtain the powder of each alloy having a particle size of up to 75µm (200mesh).

With regard to a material obtained by the method E, a hydrogen heat treatment is carried out in the same manner as in the above-mentioned cases except for excluding the pulverizing by a hydrogenation process. In the powder obtained by the E method, the powder is subjected to particle size control by sieving to obtain powder having a particle size of up to 75µm (200mesh).

The hydrogen occluding alloys Nos.1 to 32 of the present invention (referred to the alloy(s) of the present invention, hereinafter) are produced by the above-mentioned processes.

For comparison, the conventional hydrogen occluding alloys Nos.1 to 10 (referred to as the conventional alloy(s), hereinafter) are produced wherein hydrogen occluding alloy materials having a prescribed shape are made of molten alloys having a composition shown Table 4 by subjecting the molten alloys to any one of the molten alloy treatments of (A) to (E) in accordance with the combinations of the molten alloy treatments with the molten alloys as shown in Table 4.; and a hydrogen heat treatment to the hydrogen occluding alloy materials is carried out in the same manner as to the hydrogen occluding alloy materials of the present invention except that heating up is carried out to a prescribed temperature of within the range of 673 to 1273K (400 to 1000 °C) in a hydrogen atmosphere having a prescribed pressure of within the range of 0.11 to 1.01MPa (1.1 to 10bar), followed by holding at this temperature for 1 hour, and then, cooling is carried out to a temperature of 573K (300°C) or less.

With regard to the alloys of the present invention Nos.1 to 32 and the conventional alloys Nos.1 to 10, a microstructure is observed by using X-ray diffraction and scanning electron microscope (the observed examples are prepared by a focused ion beam method ) and the following results are obtained; as shown in Fig.1 illustrating the microstructure of the alloy No.2 of the present invention, the microstructure of all the alloys of the present invention Nos.1 to 32 comprised a continuous phase and dispersed phase wherein the continuous phase is composed of CaCu₅-type crystal structure and the dispersed phase is composed of three phases comprising Ce₂Ni,-type crystal structure, rare earth element hydride which is a reaction product produced by the hydrogen heat treatment of the Ce₂Ni₇-type crystal structure and CaCu₅-type crystal structure, and the dispersed phase of the CaCu₅-type crystal structure is interposed in between the Ce₂Ni₇-type crystal structure and rare earth element hydride both of which are dispersed phases, while the microstructure of all the conventional alloys No.1 to 10 comprised a matrix having CaCu₅-type crystal structure in which rare earth element hydride is dispersively distributed.

Next, with regard to the alloys of the present invention Nos.1 to 32 and the conventional alloys Nos.1 to 10, battery characteristics are investigated where each alloy is incorporated into a battery as a cathode.

First, Copper(I) oxide (Cu₂O) as a conductive agent, polytetrafluoroethylene (PTFE) as a binder and carboxymethyl cellulose (CMC) as a thickener are added to each alloy of the present invention Nos.1 to 32 and the conventional alloys Nos.1 to 10 to form a paste and the resultant paste is filled up into a commercially available sintered porous Ni plate having a porosity of 95%. The sintered porous plate is dried and pressed, and shaped into a plate of 30mm X 40mm having a thickness of 0.40 to 0.43mm. The amount of the filled active material powder is approximately 1.8g. A nickel thin plate for forming a lead is welded to a side of the shaped plate to form a negative electrode. On the other hand, a positive electrode is formed as follows; a paste is prepared from Ni(OH)₂ as an active material to which cobalt monoxide (CoO) as a conductive agent, polytetrafluoroethylene (PTFE) as a binder and carboxymethyl cellulose (CMC) as a thickener are added; the resultant paste is filled up into the above mentioned sintered porous Ni plate; then, the sintered porous plate is dried and pressed, and shaped into a plate of 30mm X 40mm having a thickness of 0.71 to 0.73mm; and a nickel thin plate is welded to a side of the shaped plate, thereby to form a positive electrode. A battery is fabricated as follows; the positive electrodes are disposed on both sides of the negative electrode each through a separator made of a polypropylene/polyethylene copolymer, and protective plates made of vinyl chloride are provided on the outer side of the positive electrodes in such a manner that the positive electrodes are integrally sandwiched in between the protective plates so as to prevent the omission of the active material from the outside of the positive electrodes; the integrated electrodes are inserted into a cell made of vinyl chloride; and an aqueous solution of KOH having a concentration of 28% as an electrolyte is poured into the cell, to thereby produce a battery.

The above-mentioned battery is subjected to a charge/discharge treatment, that is an high-rate initial activation treatment, which comprised the following conditions;
charge speed: 0.25C,
charged quantity of electricity: 135% relative to a negative electrode capacity,
discharge speed: 10C (40 times faster than the charge speed), and
terminated voltage of discharge: -650mV VS Hg/HgO.

The above-mentioned charge/discharge is counted as one cycle and the charge/discharge is repeated. A discharge capacity is measured at 5, 10 and 15 cycles of the charge/discharge, and further the charge/discharge cycle is repeated until the discharge capacity showed no change to measure a critical discharge capacity.

The above-mentioned critical discharge capacity is defined as a maximum discharge capacity and the results of the measurement are shown in Figs.5 and 6.

Further, carbonyl nickel as a conductive agent, polytetrafluoroethylene (PTFE) as a binder and carboxymethyl cellulose (CMC) as a thickener are added to each alloy of the present invention Nos.1 to 32 and the conventional alloys Nos.1 to 10 to form a paste and the resultant paste is filled up into a commercially available sintered porous Ni plate having a porosity of 95%. The sintered porous plate is dried and pressed, and shaped into a plate of 320mm X 31mm having a thickness of 0.40 to 0.43mm. The amount of the filled active material powder is approximately 10g. A nickel thin plate for forming a lead is welded to a side of the shaped plate to form a negative electrode. On the other hand, a positive electrode is formed as follows; a paste is prepared from Ni(OH)₂ as an active material to which cobalt monoxide (CoO) as a conductive agent, polytetrafluoroethylene (PTFE) as a binder and carboxymethyl cellulose (CMC) as a thickener are added; the resultant paste is filled up into the sintered porous Ni plate; then, the sintered porous plate is dried and pressed, and shaped into a plate of 295mm X 31mm having a thickness of 0.50 to 0.53mm; and a nickel thin plate is welded to a side of the shaped plate, thereby to form a positive electrode. Then, the negative electrode is piled on the positive electrode through a separator made of a polypropylene/polyethylene copolymer and the piled electrodes are wound to form a swirl having a diameter of about 20.5mm. After that, the swirl is put in a cylindrical receptacle made of Ni having a inside diameter of 21mm and an aqueous solution of potassium hydroxide having a concentration of 28% is poured into the cylindrical receptacle, followed by sealing, to thereby to produce a hermetically sealed cylindrical battery having a rated capacity of 2700mAh.

With regard to the hermetically sealed cylindrical batteries in which each of the alloys of the present invention Nos.1 to 32 and the conventional alloy Nos.1 to 10 are incorporated as a cathode, an initial activation treatment comprising charge/discharge and having the following condition is carried out;
(1) charge/discharge condition
   room temperature: in a thermostatic chamber having a temperature of 20°C,
   charge speed: 0.25C,
   charged time: 4.8hrs,
   discharge speed: 0.25C, and
   terminated voltage of discharge: 0.9V
(2) number of charge/discharge cycles: 5 cycles (the above-mentioned charge/discharge is counted as one cycle)

Then, the battery is further subjected to a charge having the following condition;
room temperature: in a thermostatic chamber having a temperature of 20°C,
charge speed: 0.25C
charged time: 4.8hours,

After the above-mentioned charge, the battery is left at room temperature (in a thermostatic chamber having a temperature of -15°C) for 5 hours and is confirmed to have been stable at -15°C. After that, in the thermostatic chamber having a temperature of -15 °C, discharge is continued under a discharge speed of 2C which is a quick discharge condition until the terminated voltage of discharge reached 0.9V and the discharge capacity thereof (referred to as high-rate discharge capacity at low temperature, hereinafter) is measured. The results of the measurement are also shown in Tables 5 and 6.

As is clear from Tables 1 to 6, when the alloys of the present invention Nos.1 to 32 are used as a cathode of battery, the maximum discharge capacity is greatly increased by the high-rate initial activation treatment of the battery owing to the action of the Ce₂Ni,-type crystal structure and CaCu₅-type crystal structure both of which are the dispersed phases of the above-mentioned alloys, namely, a quite high discharge capacity is provided to the battery as well as the maximum discharge capacity which is greatly increased is available at small number of charge/discharge cycles, and further, a high-rate discharge capacity is available at a low temperature (-15 °C), whereas in batteries comprising the conventional alloys Nos.1 to 10, the maximum discharge capacity is relatively low , many number of charge/discharge cycles are required for attaining the maximum discharge capacity and a high-rate discharge capacity at low temperature is limited to a relatively low value.

As mentioned above, when the hydrogen occluding alloys of the present invention are used as a cathode of battery, a high maximum discharge capacity is available by a high-rate initial activation treatment and further, a high-rate discharge capacity is available at a low temperature. Accordingly, the battery can be used for various mechanical equipment which require a high power, for examples, electric tools, electrically assisted bicycles and electric automobiles. Furthermore, as the battery exhibits a battery performance which enables the battery to be used at a low temperature and the high-rate initial activation treatment can be completed by small number of charge/discharge cycles, the alloys of the present invention are possessed of characteristics useful for industry which include contribution to providing to batteries a long life and a low cost.

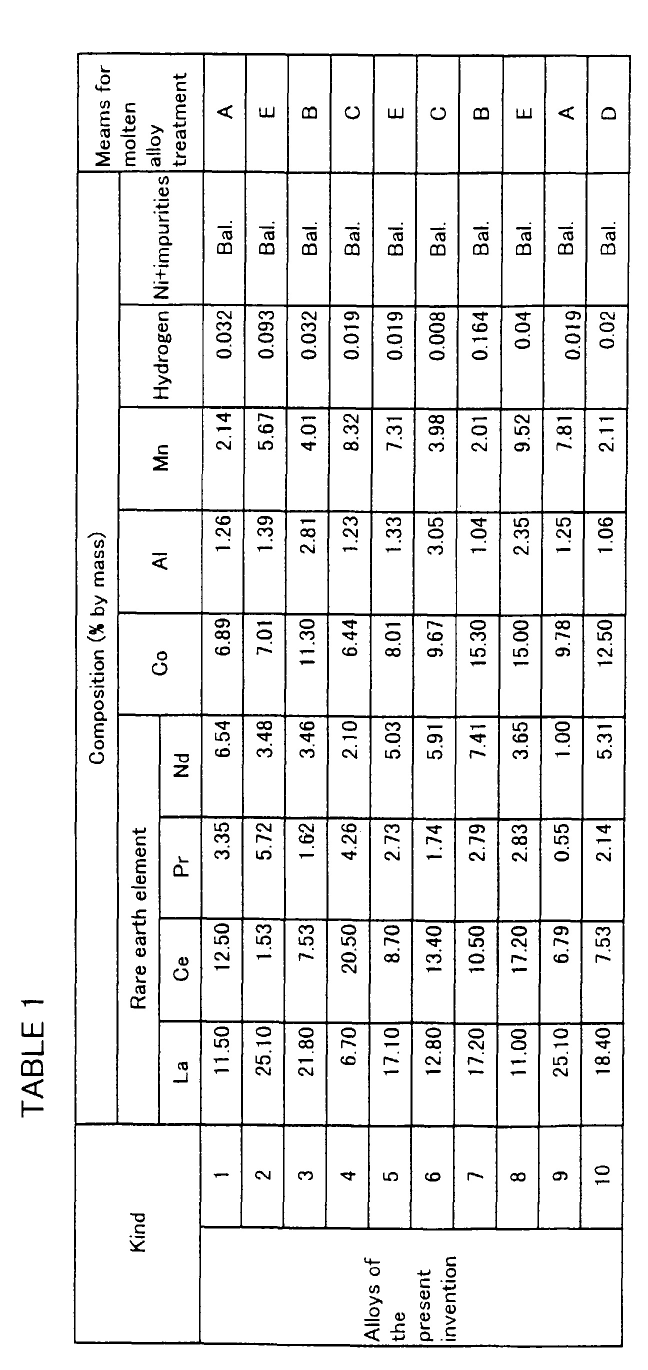

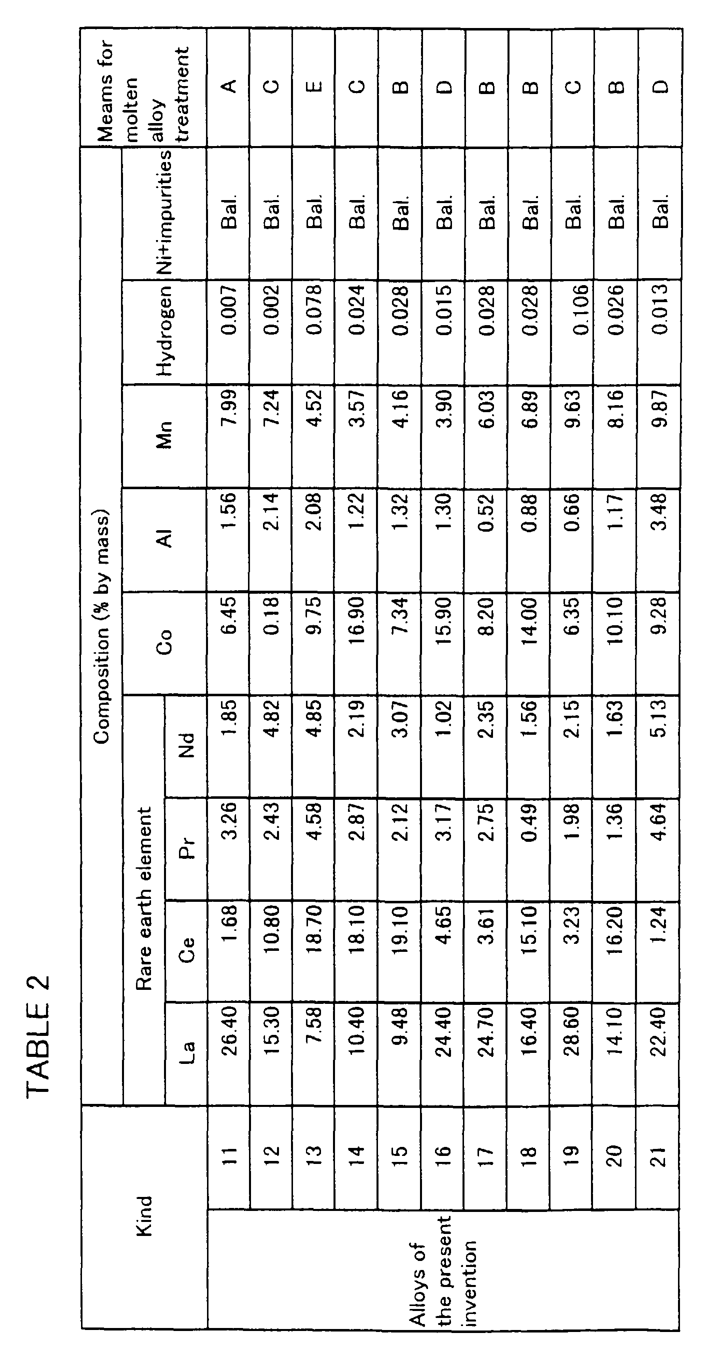

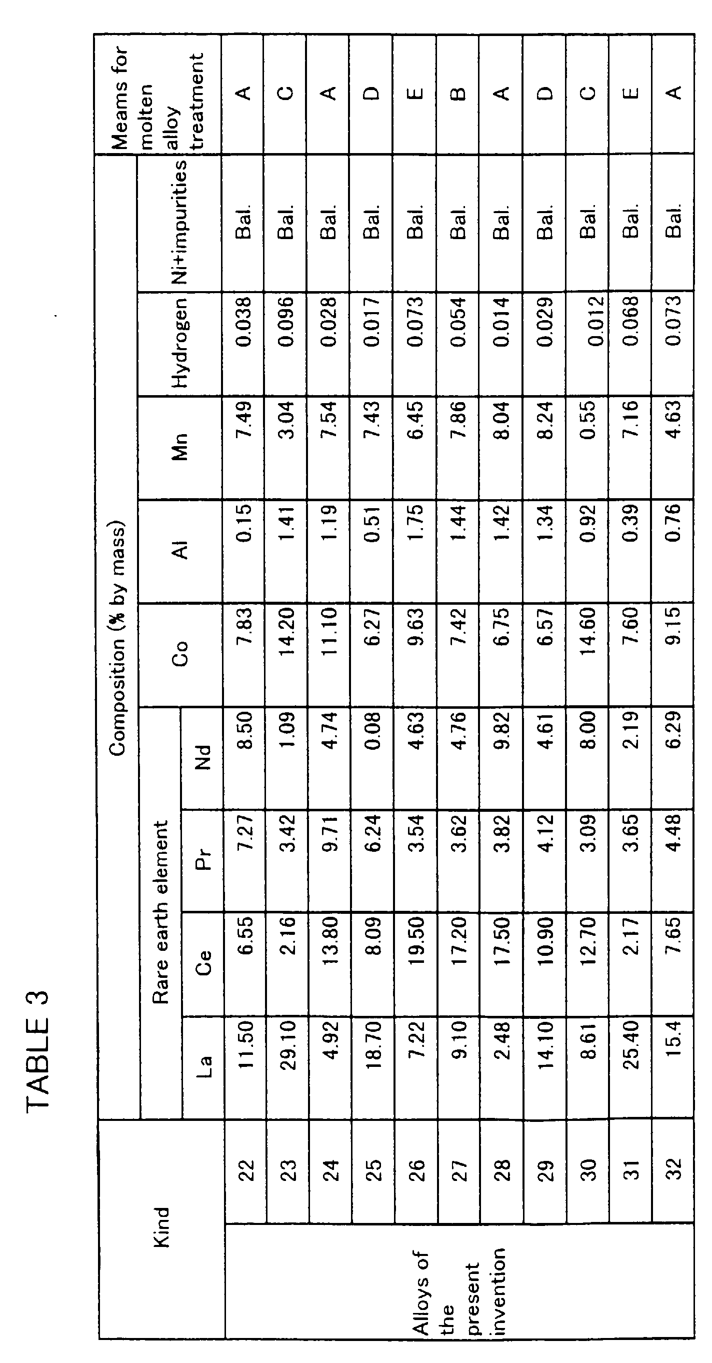

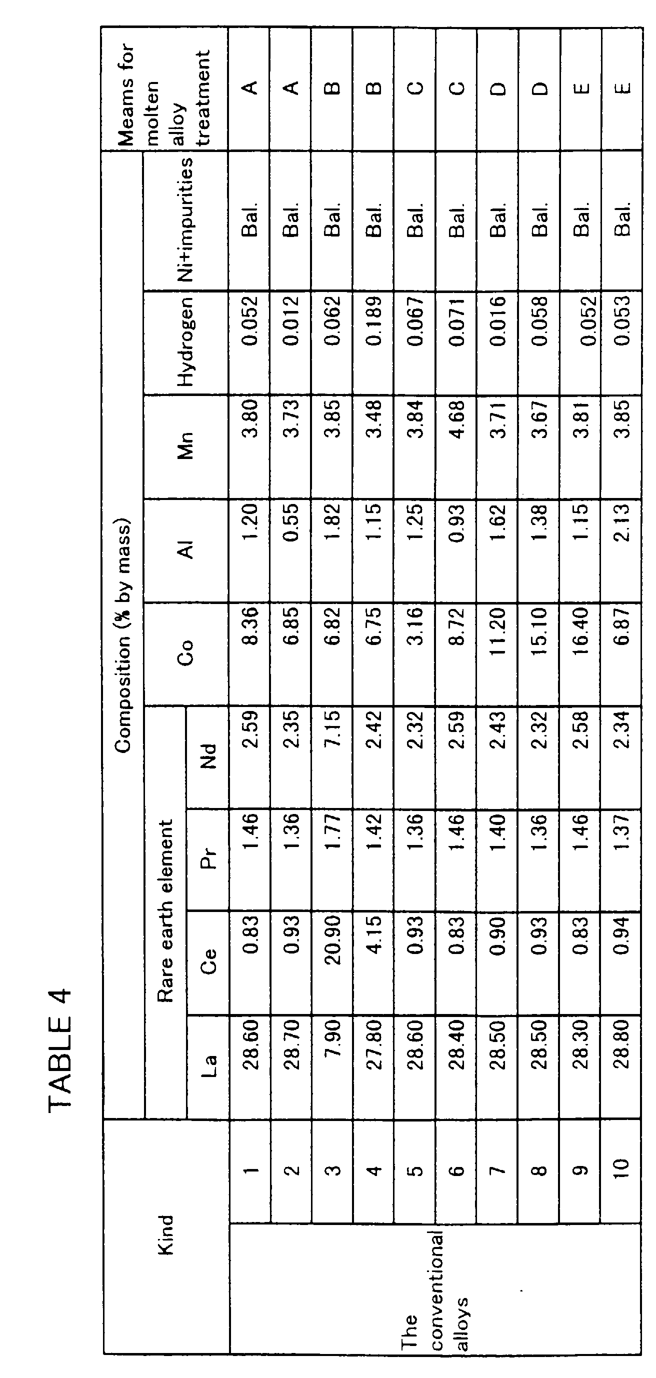

**TABLE 5**

| Kind | | Allowable maximum discharge capacity of battery in high-rate initial activation treatment (mAh/g) | Discharge capacity (mAh/g) | | | High-rate discharge cpacity at low temperature (m/Ah) |
|---|---|---|---|---|---|---|
| | | | Number of charge/disharge: 5cycles | Number of charge/disharge: 10cycles | Number of charge/disharge: 15cycles | |
| Alloys of the present invention | 1 | 188 | 92 | 174 | 182 | 2350 |
| | 2 | 205 | 119 | 176 | 200 | 2510 |
| | 3 | 189 | 99 | 177 | 184 | 2390 |
| | 4 | 179 | 94 | 155 | 175 | 2316 |
| | 5 | 178 | 89 | 159 | 171 | 2311 |
| | 6 | 165 | 88 | 146 | 159 | 2288 |
| | 7 | 205 | 116 | 192 | 199 | 2411 |
| | 8 | 192 | 109 | 177 | 182 | 2467 |
| | 9 | 179 | 87 | 155 | 174 | 2301 |
| | 10 | 180 | 84 | 156 | 175 | 2334 |
| | 11 | 161 | 65 | 152 | 156 | 2200 |
| | 12 | 151 | 88 | 136 | 147 | 2198 |
| | 13 | 203 | 117 | 179 | 198 | 2471 |
| | 14 | 182 | 84 | 166 | 179 | 2384 |
| | 15 | 185 | 101 | 176 | 180 | 2332 |
| | 16 | 174 | 79 | 162 | 168 | 2320 |
| | 17 | 185 | 84 | 172 | 179 | 2353 |
| | 18 | 185 | 89 | 158 | 181 | 2290 |
| | 19 | 207 | 108 | 195 | 202 | 2431 |
| | 20 | 177 | 75 | 155 | 173 | 2318 |
| | 21 | 182 | 88 | 155 | 177 | 2431 |
| | 22 | 191 | 82 | 167 | 184 | 2340 |

**TABLE 6**

| Kind | | Allowable maximum of battery in high-rate initial activation treatment (mAh/g) | Discharge capacity (mAh/g) | | | High-rate discharge cpacity at low temperature (m/Ah) |
|---|---|---|---|---|---|---|
| | | | Number of charge/disharge: 5cycles | Number of charge/disharge: 10cycles | Number of charge/disharge: 15cycles | |
| Alloys of the present invention | 23 | 206 | 84 | 192 | 201 | 2463 |
| | 24 | 171 | 69 | 157 | 165 | 2326 |
| | 25 | 176 | 72 | 166 | 172 | 2361 |
| | 26 | 199 | 94 | 177 | 191 | 2335 |
| | 27 | 196 | 85 | 168 | 189 | 2393 |
| | 28 | 173 | 98 | 158 | 169 | 2308 |
| | 29 | 183 | 100 | 163 | 177 | 2364 |
| | 30 | 178 | 89 | 159 | 174 | 2262 |
| | 31 | 185 | 83 | 166 | 180 | 2365 |
| | 32 | 184 | 85 | 166 | 180 | 2378 |
| The conventional alloys | 1 | 125 | 8 | 40 | 97 | 1075 |
| | 2 | 136 | 22 | 34 | 102 | 1197 |
| | 3 | 141 | 13 | 43 | 101 | 1318 |
| | 4 | 145 | 12 | 41 | 116 | 1313 |
| | 5 | 126 | 10 | 38 | 88 | 1235 |
| | 6 | 100 | 13 | 34 | 71 | 1003 |
| | 7 | 127 | 14 | 38 | 95 | 1271 |
| | 8 | 105 | 10 | 30 | 84 | 1079 |
| | 9 | 109 | 10 | 33 | 82 | 1050 |
| | 10 | 111 | 5 | 28 | 79 | 1118 |

## Claims

1. A hydrogen occluding alloy used for a cathode of battery which comprises;
32 to 38% of rare earth elements mainly comprising La and/or Ce,
0.1 to 17% of Co,
0.1 to 3.5 % of Al,
0.5 to 10 % of Mn and
0.005% to 0.2% of hydrogen, with the balance being Ni and inevitable impurities,
and has a microstructure obtained by X-ray diffraction and microstructure observation with scanning electron microscope, said microstructure comprising a continuous phase and dispersed phase wherein the continuous phase is composed of CaCu₅-type crystal structure and the dispersed phase is composed of three phases comprising Ce₂Ni₇-type crystal structure, rare earth element hydride which is a reaction product produced by the hydrogen heat treatment of the Ce₂Ni₇-type crystal structure and CaCu₅-type crystal structure, and the dispersed phase of the CaCu₅-type crystal structure is interposed in between the Ce₂Ni₇-type crystal structure and rare earth element hydride both of which are dispersed phases, wherein the hydrogen occluding alloy enables to provide to the battery a high discharge capacity at small number of charge/discharge cycles by a high-rate initial activation treatment and to increase a high-rate discharge capacity at low temperature.
